# EUROPÄISCHE PATENTANMELDUNG

(11) **EP 3 525 143 A1**
(43) Veröffentlichungstag der Anmeldung: **14.08.2019**
(21) Anmeldenummer: 18156525.0
(22) Anmeldetag: 13.02.2018
(51) Int. Cl.: G06Q 10/02, G06Q 10/04, G06Q 20/00, G06Q 50/30, G08G 1/00, G05D 1/02

(54) **VORRICHTUNG ZUM STEUERN EINER FLOTTE VON AUTONOMEN FAHRZEUGEN**

(71) Anmelder: MAGNA STEYR Fahrzeugtechnik AG & Co KG, 8041 Graz (AT)
(72) Erfinder: MUELLER, Helfried, 8143 Dobl (AT); PASSATH, Markus, 8200 Gleisdorf (AT)
(74) Vertreter: Zangger, Bernd

(57) **Zusammenfassung**

Eine Fahrzeugflottensteuervorrichtung, umfassend mehrere autonome Fahrzeuge und eine zentrale Steuereinheit zur Berechnung der Fahrtrouten der autonomen Fahrzeuge, wobei die autonomen Fahrzeuge zumindest umfassen ein erstes autonomes Fahrzeug und ein zweites autonomes Fahrzeug, wobei dem ersten autonomen Fahrzeug in der Steuereinheit ein erster Prioritätsstatus zugeordnet ist und dem zweiten autonomen Fahrzeug in der Steuereinheit ein zweiter Prioritätsstatus zugeordnet ist, wobei die Steuereinheit dazu eingerichtet ist, bei Anforderung der Berechnung einer Fahrtroute für das erste autonome Fahrzeug von einem definierten Ausgangspunkt zu einem definierten Zielpunkt und bei Anforderung der Berechnung einer Fahrtroute für das zweite autonome Fahrzeug vom selben definierten Ausgangspunkt zum selben definierten Zielpunkt, auf Grund der unterschiedlichen Prioritätsstati verschiedene Fahrtrouten zu berechnen, so dass das erste autonome Fahrzeug den Zielpunkt rascher erreicht, als das zweite autonome Fahrzeug.

## Beschreibung

### Gebiet der Erfindung

Die vorliegende Erfindung betrifft eine Fahrzeugflottensteuervorrichtung, umfassend mehrere autonome Fahrzeuge und eine zentrale Steuereinheit zur Berechnung der Fahrtrouten der autonomen Fahrzeuge.

### Stand der Technik

Autonome Fahrzeuge sind an sich bekannt und erlauben das Erreichen eines vorgegebenen Ziels "autonom", also mittels einer Steuereinheit die eine geeignete Fahrtroute in einem ausreichenden Detailierungsgrad für das Fahrzeug ermittelt, so dass diese Fahrtroute durch diese und/oder eine zugeordnete weitere Steuereinheit auch umgesetzt werden kann, so dass das Eingreifen eines Menschen als Fahrer des Fahrzeuges nicht notwendig ist.

Eine Steuereinheit kann auch als "Zentrale" ausgelegt sein, so dass durch eine Steuereinheit mehrere autonome Fahrzeuge gesteuert werden können, zumindest in dem die Fahrtrouten der mehreren autonomen Fahrzeuge, im für solche Fahrzeuge erforderlichen Detailierungsgrad, berechnet werden können. Mehrere solche Fahrzeuge können insbesondere eine Fahrzeugflotte bilden.

Insbesondere in Städten kommt es oft zu Staubildungen, so dass mehr Zeit in Fahrzeugen verbracht werden muss, also zur Absolvierung der Wegstrecke an sich nötig wäre. Je nach Umständen, können derartige Verzögerungen mehr oder weniger unerwünscht für bestimmte Fahrzeuge bzw. Fahrzeuginsassen sein.

### Zusammenfassung der Erfindung

Es ist eine Aufgabe der Erfindung, autonome Fahrzeuge und deren Steuerung in dieser Hinsicht zu verbessern und insbesondere eine Fahrzeugflottensteuervorrichtung anzugeben, die den unterschiedlichen Bedürfnissen nach rascher Zielerreichung in autonomen Fahrzeugen besser gerecht wird.

Die Lösung der Aufgabe erfolgt durch eine Fahrzeugflottensteuervorrichtung nach Anspruch 1.

Erfindungsgemäß umfasst eine Fahrzeugflottensteuervorrichtung mehrere autonome Fahrzeuge und eine zentrale Steuereinheit zur Berechnung der Fahrtrouten der autonomen Fahrzeuge. Die autonomen Fahrzeuge umfassen zumindest ein erstes autonomes Fahrzeug und ein zweites autonomes Fahrzeug, wobei dem ersten autonomen Fahrzeug in der Steuereinheit ein erster Prioritätsstatus zugeordnet ist und dem zweiten autonomen Fahrzeug in der Steuereinheit ein zweiter Prioritätsstatus zugeordnet ist. Die Steuereinheit ist dazu eingerichtet, bei Anforderung der Berechnung einer Fahrtroute für das erste autonome Fahrzeug von einem definierten Ausgangspunkt zu einem definierten Zielpunkt und bei Anforderung der Berechnung einer Fahrtroute für das zweite autonome Fahrzeug vom selben definierten Ausgangspunkt zum selben definierten Zielpunkt, auf Grund der unterschiedlichen Prioritätsstati verschiedene Fahrtrouten zu berechnen, so dass das erste autonome Fahrzeug den Zielpunkt rascher erreicht, als das zweite autonome Fahrzeug.

Erfindungsgemäß wird das Verhalten der Fahrzeuge einer Flotte, die von einer zentralen Steuereinheit betrieben werden, von der zentralen Steuereinheit aufeinander abgestimmt, so dass Fahrzeuge abhängig von ihrem jeweiligen "Prioritätsstatus" rascher oder weniger rasch an ihr Ziel gelangen. Hierzu wird von der Steuereinheit für Fahrzeuge mit erster, höherer Priorität eine andere Fahrtroute bestimmt und gegebenenfalls auch umgesetzt, als für Fahrzeuge mit einer zweiten, niedrigeren Priorität.

Diese Priorität kann auf Grund eines höheren oder niedrigeren Bedürfnisses des Fahrzeuges bzw. dessen Insassen vergeben sein, das Ziel rasch zu erreichen. Insbesondere kann die höhere oder niedrigere Priorität durch Zahlung eines höheren oder niedrigeren Betrages an den Betreiber der Fahrzeugflottensteuervorrichtung festgelegt werden. Insbesondere kann die höhere oder niedrigere Priorität nach Kauf unterschiedlich wertiger Lizenzen, beispielsweise "Gold-", "Silber-", "Bronzelizenz", zugeordnet werden.

Dem ersten autonomen Fahrzeug kann in der Steuereinheit daher auf Grund einer ersten Finanztransaktion der erste Prioritätsstatus zugeordnet sein und dem zweiten autonomen Fahrzeug in der Steuereinheit auf Grund einer zweiten Finanztransaktion der zweite Prioritätsstatus zugeordnet sein.

Die erste und zweite Finanztransaktion können jeweils den Kauf einer zeitlich limitierten Leistung, insbesondere den Kauf einer Stunden-, Tages-, Wochen-, Monats- oder Jahreskarte darstellen, nämlich die erste Finanztrasaktion zu einem ersten, höheren Preis und die zweite Finanztransaktion zu einem zweiten, niedrigeren Preis.

Die Steuereinheit ist bevorzugt dazu eingerichtet, dem ersten autonomen Fahrzeug mit erstem Prioritätsstatus zumindest abschnittsweise einen kürzeren Fahrweg zuzuordnen, als dem zweiten autonomen Fahrzeug mit zweitem Prioritätsstatus, insbesondere eine kürzere Straße oder eine kürzere Fahrspur. Der kürzere Fahrweg kann sich daher auf eine längere Distanz beziehen, wie bei der Auswahl einer kürzeren Verbindungstraße, oder auf eine kürzere Distanz beziehen, wir bei der Auswahl einer abkürzenden Fahrspur oder Fahrlinie.

Die Steuereinheit ist bevorzugt dazu eingerichtet, dem ersten autonomen Fahrzeug mit erstem Prioritätsstatus zumindest abschnittsweise einen Fahrweg zuzuordnen, der für raschere Fahrt ausgelegt ist, als dem zweiten autonomen Fahrzeug mit zweitem Prioritätsstatus, insbesondere eine raschere Straße oder eine raschere Fahrspur. Die "Auslegung" auf raschere Fahrt kann durch eine natürliche bzw. technische Beschaffenheit der Straße gegeben sein, beispielsweise eine bessere oder breitere Straße bzw. Straßenoberfläche, oder auch durch Kulturbedingungen geschaffen sein, insbesondere durch Festlegung einer Fahrspur als Überholspur und dergleichen.

Die Steuereinheit ist besonders bevorzugt dazu eingerichtet, dem ersten autonomen Fahrzeug mit erstem Prioritätsstatus zumindest abschnittsweise eine höhere Geschwindigkeit zuzuordnen, eine Überholspur zuzuordnen oder einen Vorrang an einer Kreuzung zuzuordnen und/oder dem zweiten autonomen Fahrzeug mit zweitem Prioritätsstatus, zumindest abschnittsweise eine niedrigere Geschwindigkeit oder ein Anhalten zuzuordnen, eine langsamere, insbesondere eine bereits gestaute Spur zuzuordnen oder einen Nachrang an einer Kreuzung zuzuordnen.

## Patentansprüche

1. Fahrzeugflottensteuervorrichtung, umfassend mehrere autonome Fahrzeuge und eine zentrale Steuereinheit zur Berechnung der Fahrtrouten der autonomen Fahrzeuge, wobei die autonomen Fahrzeuge zumindest umfassen ein erstes autonomes Fahrzeug und ein zweites autonomes Fahrzeug, wobei dem ersten autonomen Fahrzeug in der Steuereinheit ein erster Prioritätsstatus zugeordnet ist und dem zweiten autonomen Fahrzeug in der Steuereinheit ein zweiter Prioritätsstatus zugeordnet ist, wobei die Steuereinheit dazu eingerichtet ist, bei Anforderung der Berechnung einer Fahrtroute für das erste autonome Fahrzeug von einem definierten Ausgangspunkt zu einem definierten Zielpunkt und bei Anforderung der Berechnung einer Fahrtroute für das zweite autonome Fahrzeug vom selben definierten Ausgangspunkt zum selben definierten Zielpunkt, auf Grund der unterschiedlichen Prioritätsstati, verschiedene Fahrtrouten zu berechnen, so dass das erste autonome Fahrzeug den Zielpunkt rascher erreicht, als das zweite autonome Fahrzeug.

2. Fahrzeugflottensteuervorrichtung nach Anspruch 1,
**dadurch gekennzeichnet, dass** dem ersten autonomen Fahrzeug in der Steuereinheit auf Grund einer ersten Finanztransaktion der erste Prioritätsstatus zugeordnet ist und dem zweiten autonomen Fahrzeug in der Steuereinheit auf Grund einer zweiten Finanztransaktion der zweite Prioritätsstatus zugeordnet ist.

3. Fahrzeugflottensteuervorrichtung nach Anspruch 2,
**dadurch gekennzeichnet, dass** die erste und zweite Finanztransaktion jeweils den Kauf einer zeitlich limitierten Leistung, insbesondere den Kauf einer Stunden-, Tages-, Wochen-, Monats- oder Jahreskarte darstellt, nämlich die erste Finanztrasaktion zu einem ersten, höheren Preis und die zweite Finanztransaktion zu einem zweiten, niedrigeren Preis.

4. Fahrzeugflottensteuervorrichtung nach zumindest einem der vorhergehenden Ansprüche,
**dadurch gekennzeichnet, dass** die Steuereinheit dazu eingerichtet ist, dem ersten autonomen Fahrzeug mit erstem Prioritätsstatus zumindest abschnittsweise einen kürzeren Fahrweg zuzuordnen, als dem zweiten autonomen Fahrzeug mit zweitem Prioritätsstatus, insbesondere eine kürzere Straße oder eine kürzere Fahrspur.

5. Fahrzeugflottensteuervorrichtung nach zumindest einem der vorhergehenden Ansprüche,
**dadurch gekennzeichnet, dass** die Steuereinheit dazu eingerichtet ist, dem ersten autonomen Fahrzeug mit erstem Prioritätsstatus zumindest abschnittsweise einen Fahrweg zuzuordnen, der für raschere Fahrt ausgelegt ist, als dem zweiten autonomen Fahrzeug mit zweitem Prioritätsstatus, insbesondere eine raschere Straße oder eine raschere Fahrspur.

6. Fahrzeugflottensteuervorrichtung nach zumindest einem der vorhergehenden Ansprüche,
**dadurch gekennzeichnet, dass** die Steuereinheit dazu eingerichtet ist, dem ersten autonomen Fahrzeug mit erstem Prioritätsstatus zumindest abschnittsweise eine höhere Geschwindigkeit zuzuordnen, eine Überholspur zuzuordnen oder einen Vorrang an einer Kreuzung zuzuordnen und/oder dem zweiten autonomen Fahrzeug mit zweitem Prioritätsstatus, zumindest abschnittsweise eine niedrigere Geschwindigkeit oder ein Anhalten zuzuordnen, eine langsamere, insbesondere eine gestaute Spur zuzuordnen oder einen Nachrang an einer Kreuzung zuzuordnen.
